# EUROPEAN PATENT APPLICATION

(11) **EP 4 209 767 A1**
(43) Date of publication of application: **12.07.2023**
(21) Application number: 20952617.7
(22) Date of filing: 27.11.2020
(51) Int. Cl.: G01M 13/045

(54) **METHOD FOR DIAGNOSING THE TECHNICAL CONDITION OF ROTATING EQUIPMENT**

(30) Priority: 01.09.2020 RU 2020128922
(71) Applicant: Joint Stock Company "Rosenergoatom", Moscow 109507 (RU); NATIONAL RESEARCH NUCLEAR UNIVERSITY MEPHI (Moscow Engineering Physics Institute), Moscow 115409 (RU); Science and Innovations - Nuclear Industry Scientific Development, Private Enterprise, Moscow, 119017 (RU)
(72) Inventor: ABIDOVA, Elena Aleksandrovna, Volgodonsk, 347360 (RU); BABENKO, Roman Gennadevich, Volgodonsk, 347360 (RU)
(74) Representative: Osmans, Voldemars
(86) International application number: PCT/RU2020/000639
(87) International publication number: WO 2022/050865

(57) **Abstract**

The invention relates to methods for diagnostics of the technical condition of electrically driven equipment and can be used for monitoring of vibrations in rotating equipment at nuclear power plants. The claimed method includes measuring and recording of diagnostic signals within a test period while the equipment under inspection is in operation, dividing the recordings of a reference signal and the signal from the equipment under inspection into five segments of at least two seconds in length, converting each segment of the recordings of the reference and inspection signal into a spectrum which represents the distribution of amplitudes across frequencies, sampling amplitudes of the diagnostic signal spectra from the inspected and fault-free equipment at the frequencies where deviations appear between the inspection and reference signals, calculating the absolute difference of the amplitudes in the spectra of the inspected and fault-free equipment, ranking of the absolute differences and summarizing of the resultant ranks. The sum of the resultant ranks is compared with the critical value to establish whether the rotating equipment is in excess of the prescribed vibration values and to establish the presence of fault if the sum of the resultant ranks exceeds the critical value.

## Description

The invention relates to the field of technical diagnostics, particularly to methods for diagnosing the technical condition of electrically driven equipment and can be used for monitoring of vibrations in the rotating equipment at nuclear power plants.

Monitoring of the technical condition of rotating equipment is necessary to detect any defects associated with wear of rotating components; misalignment, defects of bearings; non-uniformity of the air gap between the motor rotor and stator; identification of any defects of the gearbox parts - bearings, kinematic pairs.

A method for diagnostics of electrical equipment (Russian utility patent No. 2117957), involving determination of the technical condition of electrically driven equipment directly based on the "profile" of the external low-frequency electromagnetic field, wherein the signal induced under the impact of magnetic intensity in the coil of a measuring element located in the motor stator end winding is compared subsequent to its conversion and registration with the initial values of the external field stored in the database and corresponding to various motor operation modes, is known.

Drawbacks of the above-mentioned technical solutions include use of additional equipment, which increases the material and operational costs and complicates the diagnostics process.

A method for diagnostics of the technical condition of electrically driven valves (Russian utility patent No. 2456629), which involves comparison of the measured motor current spectrum values with the initial values stored in the database and includes measurement of mechanical vibrations in the course of the motor operation recorded in the electric winding current signal of the induction motor stator used as a vibration sensor, wherein the current signal from the induction motor stator is processed and converted subsequent to its measurement, and the current spectrum is used as the diagnostic parameter, wherein the current signal frequency is normalized to the supply frequency, and any defect development is defined based on the changes in the natural frequency amplitude of the valve blocks and the electric drive, wherein the diagnostic statement "normal" is made in case of unchanged amplitude, the diagnostic statement "operable" - in case of slight linear increase of the amplitude, the diagnostic statement "condition preceding equipment failure" - in case of exponential or parabolic increase, and a conclusion on failure of any particular electrically driven valve block is made upon occurrence of differences between the measured and basic spectrum values exceeding the permissible discrepancy limits, is the closest analogue of the claimed technical solution.

Low measurement accuracy for the diagnostic signals determined in the form of amplitudes and varying in different time periods is a drawback of the closest analogue.

The objective to be achieved by the proposed invention is to improve the fault detection quality for rotating equipment in order to analyze the possibility for its further operation.

The technical result achieved by this invention includes reduction of errors in measurement and analysis of the diagnostic signals.

The essence of the invention is that according to the method for diagnosing the technical condition of rotating equipment, involving determination and assessment of mechanical vibrations in the equipment it is proposed to measure preliminarily and to record the reference diagnostic signal from the knowingly fault-free equipment of the same type as the inspected rotating equipment within a test period, and then to measure and record the diagnostic signals in the course of the inspected equipment operation within the test period with subsequent dividing of the reference signal and the inspected equipment signal records into at least five segments with the duration of at least two seconds, to convert each segment of the reference and inspection signal records into a spectrum representing the distribution of amplitudes across frequencies, to sample amplitudes of the diagnostic signal spectra from the inspected and fault-free equipment at the frequencies where deviations appear between the inspection and reference signals, and then to calculate the absolute differences of the amplitudes in the spectra of the inspected and fault-free equipment and to perform ranking of the absolute differences and summarizing of the resultant ranks, to compare the sum of the resultant ranks with the critical value and then to make a conclusion on exceedance of the prescribed vibration values for the rotating equipment and, consequently, on presence of any faults if the sum of the resultant ranks exceeds the critical value, or absence of any faults in the motor equipment if the sum of the resultant ranks is below the critical value.

It is also proposed to use vibration acceleration as the diagnostic signal.

It is proposed to determine the critical value depending on the significance level and the sample size according to the Wilcoxon T-criterion.

The proposed method is embodied as follows.

Diagnostics of the rotating equipment vibrations is performed with the use of AP2043 vibroacoustic sensors by measurement of the vibration acceleration value. Vibroacoustic sensors are installed in accordance with GOST ISO 10816. The requirements for diagnostics frequency depending on the equipment condition are determined in the regulatory documents of the enterprise.

At first, the reference diagnostic signal of the knowingly fault-free equipment of the same type as the inspected rotating equipment is preliminarily measured and recorded within a test period. Then the diagnostic signals in the course of the inspected equipment operation are measured and recorded within the test period.

Then the reference signal and the inspected equipment signal records are divided into at least five segments with the duration of at least two seconds, and each segment of the reference and inspection signal records is converted into a spectrum representing the distribution of amplitudes across frequencies.

Then the amplitudes of the diagnostic signal spectra from the inspected and fault-free equipment are sampled at the frequencies where deviations appear between the inspection and reference signals, and the absolute differences of the amplitudes in the spectra of the inspected and fault-free equipment are calculated.

Then ranking of the absolute differences and summarizing of the resultant ranks are performed, and the sum of the resultant ranks is compared with the critical value.

On the basis of the performed operations a conclusion is made on exceedance of the prescribed vibration values for the rotating equipment and, consequently, on presence of any faults if the sum of the resultant ranks exceeds the critical value, or absence of any faults in the motor equipment if the sum of the resultant ranks is below the critical value.

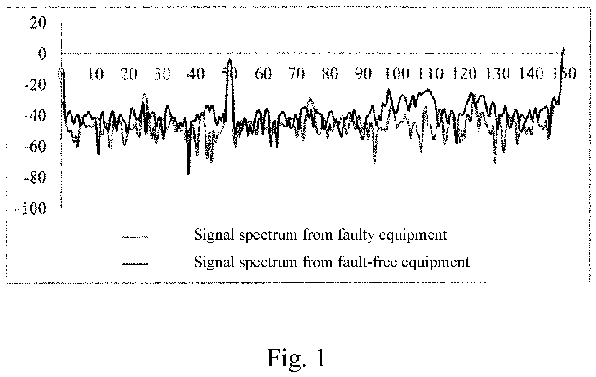

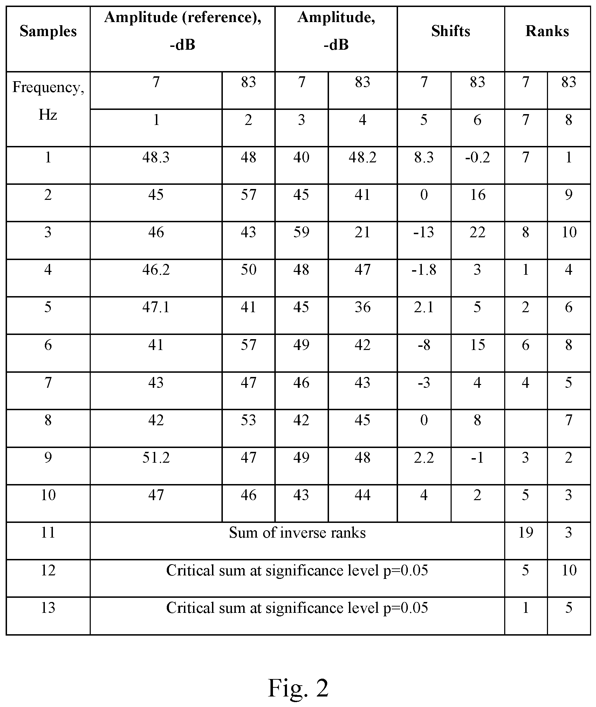

The method for diagnosing the technical condition of rotating equipment has been implemented at Novovoronezh nuclear power plant (NPP) and is explained with the following example. The obtained result of measurements and analysis is shown in Fig. 1, where a resultant curve for the spectra of fault-free and faulty equipment is presented as well as in the table in Fig. 2.

Vibration signals from fault-free equipment and the rotating equipment bearing equipment with a suspected bearing defect were measured. Each signal was divided into ten segments with the duration of two seconds each, and the Fourier spectrum was plotted for each segment. Amplitudes were measured at the characteristic frequencies of the separator 7 Hz and of the rolling elements 83 Hz, and the results were recorded in columns 1-4 of the table in Fig. 1. The differences of the spectra amplitudes in the fault-free and faulty conditions were calculated for both frequencies (columns 5 and 6 of the table in Fig. 1). The absolute differences were sorted in the ascending order, and a lower rank was assigned to a smaller difference (columns 7 and 8 of the table in Fig. 1). The inverse ranks were summarized (column 11 of the table in Fig. 1) and compared with the critical values for two different significance levels (columns 12 and 13 of the table in Fig. 1). The amplitude at the frequency of the separator 7 Hz increased in presence of any defect in four cases out often, remained unchanged in two cases and decreased in four cases. The sum of ranks turned out to be considerably higher than the critical value, consequently the amplitude at this frequency did not characterize the condition. Amplitudes at the outer ring frequency increase in the majority of cases, and their decreases are seldom and insignificant; in accordance with the Wilcoxon criterion these amplitudes represent reliable diagnostic features. Analysis of the spectrum including assessment of the diagnostic features according to the Wilcoxon criterion showed presence of a bearing defect in the inspected rotating equipment.

The proposed method can be used at NPPs as well as for monitoring of the technical condition of rotating equipment at enterprises and facilities of machine building, heat power engineering and other industries.

Application of the proposed method enables to improve the fault detection quality for rotating equipment, for example, continuous flow pumps and fans within the systems of NPP power units thus enabling to enhance the safety level in operation of nuclear power plants.

## Claims

1. A method for diagnosing the technical condition of rotating equipment, involving determination and assessment of mechanical vibrations in the equipment, **characterized in that** the reference diagnostic signal from the knowingly fault-free equipment of the same type as the inspected rotating equipment is preliminarily measured and recorded within a test period, and then the diagnostic signals in the course of the inspected equipment operation are measured and recorded within the test period with subsequent dividing of the reference signal and the inspected equipment signal records into at least five segments with the duration of at least two seconds; each segment of the reference and inspection signal records is converted into a spectrum representing the distribution of amplitudes across frequencies; sampling of amplitudes of the diagnostic signal spectra from the inspected and fault-free equipment is performed at the frequencies where deviations appear between the inspection and reference signals, and then the absolute differences of the amplitudes in the spectra of the inspected and fault-free equipment are calculated; ranking of the absolute differences and summarizing of the resultant ranks are performed, and the sum of the resultant ranks is compared with the critical value, and then a conclusion is made on exceedance of the prescribed vibration values for the rotating equipment and, consequently, on presence of any faults if the sum of the resultant ranks exceeds the critical value, or absence of any faults in the motor equipment if the sum of the resultant ranks is below the critical value.

2. The method for diagnosing the technical condition of rotating equipment according to claim 1, **characterized in that** vibration acceleration is used as the diagnostic signal.

3. The method for diagnosing the technical condition of rotating equipment according to claim 1, **characterized in that** the critical value is determined depending on the significance level and the sample size according to the Wilcoxon T-criterion.
